# EUROPÄISCHE PATENTANMELDUNG

(11) **EP 2 537 878 A1**
(43) Veröffentlichungstag der Anmeldung: **26.12.2012**
(21) Anmeldenummer: 11171274.1
(22) Anmeldetag: 24.06.2011
(51) Int. Cl.: C08G 77/28, C08G 77/442, C08F 283/12

(54) **Polysiloxane mit Thiolgruppen und Verfahren zur Herstellung**

(71) Anmelder: hanse chemie AG, 21502 Geesthacht (DE)
(72) Erfinder: Siol, Werner, 64297 Darmstadt (DE); Langerbeins, Klaus, 21502 Geesthacht (DE); Kühner, Uwe Dietrich, 20457 Hamburg (DE)
(74) Vertreter: von Renesse, Dorothea

(57) **Zusammenfassung**

Die vorliegende Erfindung betrifft Polysiloxane mit Thiolgruppen sowie Copolymere dieser Polysiloxane mit Vinylmonomeren und Verfahren zu deren Herstellung.

## Beschreibung

Die vorliegende Erfindung betrifft Polysiloxane mit Thiolgruppen sowie Copolymere dieser Polysiloxane mit Vinylmonomeren und Verfahren zu deren Herstellung.

Das Eigenschaftsbild von Polymeren wird erheblich von der Glastemperatur (Tg) der Polymeren mitbestimmt. So sind Polymere mit einer niedrigen Glastemperatur (z.B. Polybutylacrylat, Polydimethylsiloxane) bei Raumtemperatur weich und dehnbar, Polymere mit einer hohen Glastemperatur (z.B. PMMA) dagegen hart und spröde.

Es wurden verschiedene Versuche unternommen, die vorteilhaften Eigenschaften der Polymeren mit niedriger Tg (z.B. Dehnbarkeit) mit den guten Eigenschaften der Polymeren mit hoher Tg (z.B. Festigkeit) zu kombinieren. Beispiele für eine Verknüpfung der Eigenschaften von harten und weichen Polymeren sind die thermoplastisch verarbeitbaren Polyurethane (TPU) oder Blockcopolymere wie die in großen Mengen produzierten StyrolButadien-Styrol-Blockcopolymeren (SBS).

In Abhängigkeit vom Gewichtsanteil der Polystyrolblöcke in SBS-Copolymeren erhält man z.B. hochschlagzähes Polystyrol oder aber thermoplastisch verarbeitbare Elastomere.

Der Aufbau von Blockstrukturen erfordert in aller Regel aufwendige Polymerisationsverfahren, so werden beispielsweise SBS-Copolymere durch eine lebende anionische Polymerisation von Styrol und Butadien hergestellt. Wenn auch aufgrund der guten mechanischen Eigenschaften SBS-Copolymere ein Großprodukt darstellen, verhindern die schlechte Witterungsstabilität und die geringe Ölbeständigkeit die breite Verwendung dieser Polymeren im Außenbereich oder in vielen Anwendungen des Automobilbaus.

Polysiloxane sind unter der Bezeichnung Silicone in zahlreichen Anwendungen bekannt. Polysiloxane eigenen sich z. B. als Basispolymere für Dicht- und Klebstoffe, für Kautschukbauteile (Dichtungen, Babyschnuller), für Gele (Elektronikverguss), als Schmierstoff, als Wärmeträger und als Weichmacher. Technische Anwendung finden insbesondere die Polydimethylsiloxane, die Polyphenylmethylsiloxane und fluorierte Siloxane. Aus DE 601 05 620 T2 ist ein Verfahren zur Herstellung siliziumorganischer Hybridcopolymere bekannt.

Überraschend wurde nun gefunden, dass thiolgruppenhaltige Polysiloxane mit Struktureinheiten, abgeleitet von Di- oder Polythiolen sich zur Herstellung von Copolymeren mit Vinylmonomeren eignen. Thiolgruppenhaltige Polysiloxane werden in dieser Anmeldung auch als Polysiloxane mit Thiolgruppen bezeichnet.

Die erfindungsgemäßen Polysiloxane mit Thiolgruppen (Thioalkoholgruppen) können erhalten werden durch Umsetzung von C₂-C₆-alkenylgruppenhaltigen Polysiloxanen mit Dithiolen oder Polythiolen.

Die eingesetzten C₂-C₆-alkenylgruppenhaltigen Polysiloxane sind im Wesentlichen linear, es können jedoch auch verzweigte Siloxan-Einheiten vorliegen. Bevorzugte Viskositäten der Polysiloxane liegen zwischen 0,1 und 1.000 Pas, weiter bevorzugt zwischen 0,1 und 100 Pas.

Die C₂-C₆-alkenylgruppenhaltigen Polysiloxane enthalten im Allgemeinen eine oder mehr C₂-C₆-Alkenylgruppen. Bevorzugt sind mindestens zwei C₂-C₆-Alkenylgruppen. Die C₂-C₆-Alkenylgruppen können dabei endständig und/oder seitenständig zur Polysiloxanhauptkette vorliegen. Beispielsweise können lineare Polysiloxane endständig je eine C₂-C₆-Alkenylgruppe aufweisen. Die Polysiloxane können auch endständig je eine und zudem seitenständig eine oder mehrere, z. B. 1 bis 5 weitere C₂-C₆-Alkenylgruppen aufweisen. C₂-C₆-Alkenylgruppen sind z. B. Vinyl-, Allyl-, lineare oder verzweigte Hexenylgruppen oder Cyclohexenylgruppen. Bei den C₂-C₆-Alkenylgruppen handelt es sich sowohl bei den Endgruppen als auch bei den Seitengruppen bevorzugt um Vinylgruppen.

Die C₂-C₆-alkenylgruppenhaltigen Polysiloxane können neben den C₂-C₆-Alkenylgruppen Phenyl-, C₁- bis C₁₈-Alkyl- oder Halogenalkylgruppen aufweisen. Bevorzugt sind Polydimethylsiloxane, wobei die Methylgruppen teilweise oder vollständig durch Phenyl-, C₂-bis C₁₈-Alkyl- oder Halogenalkylgruppen ersetzt sein können.

Die C₂-C₆-alkenylgruppenhaltigen Polysiloxane können z.B. erhalten werden durch ringöffnende Polymerisation von Cyclodialkylsiloxanen in Anwesenheit von Dialkenyltetramethyldisiloxan. Sie sind auch kommerziell erhältlich, z.B. Polydimethylsiloxane mit endständigen Vinylgruppen von hanse chemie AG unter dem Handelsnamen Polymer VS in verschiedenen Molekulargewichten wie Polymer VS 200, Polymer VS 500 oder Polymer VS 20.000. Polydimethylsiloxane mit seiten- und endständigen Vinylgruppen sind unter dem Handelsnamen Polymer RV von hanse chemie AG erhältlich.

Die C₂-C₆-alkenylhaltigen Polysiloxane können mit Dithiolen oder Polythiolen zu Polysiloxanen mit Thiolgruppen umgesetzt werden. Dabei reagiert eine Thiolfunktion der Di-oder Polythiole mit der C₂-C₆-Alkenylgruppe. Je nach Reaktionsbedingungen bleiben die übrigen Thiolfunktionen im Reaktionprodukt erhalten. Es können aber auch weitere Thiolfunktionen aus einem Di- oder Polythiol mit C₂-C₆-Alkenylgruppen reagieren, so dass es zu einer Erhöhung des Molekulargewichts kommt und je nach Art des Polythiols auch Thiolgruppen in der Kette entstehen.

Unter Dithiolen werden Verbindungen mit zwei Thiolgruppen verstanden, unter Polythiolen werden Verbindungen mit drei oder mehr Thiolgruppen, vorzugsweise mit drei, vier oder fünf Thiolgruppen verstanden.

Die Umsetzung mit Dithiolen beispielsweise C₂-C₁₀-Alkyl-α,ω-Dithiolen wie Ethan-1,2-dithiol führt im Allgemeinen zu linear verknüpften Polysiloxanen. Vorteilhaft erfolgt die Umsetzung mit Polythiolen, die im Allgemeinen verzweigte Polysiloxane liefert.

Als Di- oder Polythiole geeignet sind ebenfalls Ester von Di- und Polyalkoholen mit Mercaptoalkansäuren, vorzugsweise Ester von Polyalkoholen mit Mercaptoalkansäuren wie Mercaptoessigsäure (Thioglykolsäure). Bevorzugte Di- oder Polythiole sind mit einer oder vorzugsweise mit mehreren α-Mercaptocarbonsäuren verestert. Beispiele bevorzugter Di-oder Polythiole sind Ester von Mercapto(C₂-C₁₀)carbonsäuren, vorzugsweise von α-Mercapto(C₂-C₁₀)-ω)-carbonsäuren, insbesondere bevorzugt sind deren Ester mit Polyolen wie Glykol, Propandiol, Glycerin, Trimethylolpropan oder Pentaerythrit, z.B. Pentaerythrittetrathioglykolat und Pentaerythrittetra-(3-mercaptopropionat). Im Allgemeinen sind Polythiole mit mindestens drei Thiolgruppen, insbesondere mit 3 oder 4 Thiolgruppen bevorzugt. Ganz besonders bevorzugt ist Pentaerythrittetrathioglykolat.

Bevorzugt werden C₂-C₆-alkenylgruppenhaltige, insbesondere vinylterminierte, lineare Polysiloxane mit einem Polythiol wie Pentaerythrittetrathioglykolat oder Pentaerythrittetra-(3-mercaptopropionat) zu einem Polysiloxan mit Thiolgruppen umgesetzt.

Die C₂-C₆-alkenylgruppenhaltigen, insbesondere vinylterminierten, Polysiloxane können auch mit einem Dithiol wie Ethan-1,2-dithiol zu einem linearen Polysiloxan mit Thiolgruppen umgesetzt werden. Die so erhaltenen Polysiloxane mit Thiolgruppen sind im Wesentlichen linear, es können jedoch auch einzelne verzweigte Siloxan-Einheiten vorliegen, vorzugsweise weniger als 10%.

Bevorzugte Viskositäten der thiolgruppenhaltigen Polysiloxane liegen zwischen 0,1 und 1.000 Pas, weiter bevorzugt zwischen 0,1 und 100 Pas.

Die Polysiloxane enthalten im Allgemeinen eine oder mehr Thiolgruppen. Bevorzugt sind mindestens 2 Thiolgruppen enthalten. Die Thiolgruppen können dabei endständig und/oder seitenständig zur Polysiloxanhauptkette vorliegen. Beispielsweise können lineare Polysiloxane endständig je eine Thiolgruppe aufweisen. Die Polysiloxane können auch endständig je eine und zudem seitenständig eine oder mehrere, z.B. 1 bis 5 weitere Thiolgruppen aufweisen.

Die Polysiloxane mit Thiolgruppen können neben den durch Umsetzung der C₂-C₆-Alkenylgruppen mit den Di- oder Polythiolen erhaltenen Gruppen noch Phenyl-, C₁- bis C₁₈-Alkyl- oder Halogenalkylgruppen aufweisen. Bevorzugt sind Polydimethylsiloxane mit Thiolgruppen, wobei die Methylgruppen teilweise oder vollständig durch Phenyl-, C₂- bis C₁₈-Alkyl- oder Halogenalkylgruppen ersetzt sein können.

Die so erhaltenen Polysiloxane mit Thiolgruppen können mit einem oder mehreren Vinylmonomeren zu Copolymeren umgesetzt werden. So werden durch z.B. Umsetzung linearer Polysiloxane mit Thiolgruppen der Formel (III) mit einem Vinylmonomer Copolymere der Formel (V) erhalten. Durch Umsetzung verzweigter Polysiloxane mit Thiolgruppen mit Vinylmonomeren werden verzweigte Copolymere erhalten.

Die beiden Reaktionen können auch als Eintopfreaktion durchgeführt werden, d .h. in einem Reaktionsgefäß wird erst die Anlagerung der Dithiole oder Polythiole an die Alkenylpolysiloxane und anschließend im selben Gefäß die Reaktion mit den Vinylmonomeren durchgeführt.

Unter einem Vinylmonomer wird ein Monomer verstanden werden, das eine ethylenisch ungesättigte C-C-Bindung enthält, die vorzugsweise endständig ist.

Als Vinylmonomere kommen beispielsweise in Betracht Diene wie Isopren, Chloropren oder Butadien, Vinylhalogenide wie Vinylchlorid, Vinylnitrile, Vinylester wie Vinylacetat und Vinylester α-verzweigter Monocarbonsäuren, Styrol und substituierte Styrole, Acrylsäure und Methacrylsäure und deren Derivate wie z.B. Ester oder Amide der (Meth)acrylsäure, (Meth)acrylsäurenitrile, und (Meth)acrylsäureanhydride. Acrylsäurealkyl-ester/amide und Methacrylsäurealkyl-ester/amide weisen bevorzugt 1 bis 18 C-Atome, weiter vorzugsweise 1 bis 12 C-Atome in der Alkylkette auf. Die Alkylkette kann linear oder verzweigt sein und weitere Funktionalitäten wie Aminogruppen oder Alkoholgruppen aufweisen.

Beispiele für Vinylmonomere sind Methylacrylat, Ethylacrylat, n-Propylacrylat, n-Butylacrylat, Isobutylacrylat, sec-Butylacrylat, tert-Butylacrylat, n-Hexylacrylat, Cyclohexylacrylat, Ethylhexylacrylat wie 2-Ethylhexylacrylat, Isobornylacrylat, Methylmethacrylat, Ethylmethacrylat, n-Butylmethacrylat, Isobutylmethacrylat, tert-Butylmethacrylat; n-Hexylmethacrylat, Cyclohexylmethacrylat, (3,3,5-Trimethyl)cyclohexylmethacrylat, Benzylmelhacrylat, Isobornylmethacrylat, Acrylnitril, Methacrylnitril, Styrol, 1,3-Butadien, 1,2-Butadien, Isopren, Vinylacetat, Vinylpropionat, Vinylversatat, Vinylchlorid, Vinylidenchlorid, Acrylsäure, Methacrylsäure, Acrylamid, Methacrylamid, 2-Hydroxyethylacrylat, 2-Hydroxyethylmethacrylat, Hydroxypropylacrylat, Propylenglycolmethacrylat, Butandiolmonoacrylat, Ethyldiglycolacrylat, Dimethylaminoethylacrylat, Dimethylaminoethyl methacrylat, N-(3-Dimethylaminopropyl)methacrylamid, Diethylaminoethylacrylat, tert-Butylaminoethylmethacrylat, 2-Chloroacrylnitril, N-Hydroxymethylacrylamid, N-Hydroxymethylmethacrylamid, 2-Sulfoethylmethacrylat, 2-Acrylamido-2-methylpropansulfonsäure, Fumarsäure, Maleinsäure, Crotonsäure, Itaconsäure, Glycidylmethacrylat, Diacetonacrylamid, Diacetonmethacrylamid, Acrylamidoglycolsäure, Methylacrylamidoglycolmethylether.

Besonders bevorzugte Vinylmonomere sind Methylacrylat, Butylacrylat, Ethylacrylat, 2-Ethylhexylacrylat, Methylmethacrylat (MMA) und Styrol. Styrol kann als Vinylmonomer auch eingesetzt werden, um den Brechungsindex zu beeinflussen.

Die Herstellung von erfindungsgemäßen Polysiloxanen mit Thiolgruppen sowie von Copolymeren dieser Polysiloxane mit Vinylmonomeren werden in den nachfolgenden Schemata I, II, III und IV veranschaulicht.

Dabei können sich in Schema I in den Polysiloxanen der Formeln (I), (III) und (V) die C₂-C₆-Alkenylgruppen bzw. die daraus durch Umsetzung mit den Di-/Polythiolen (Formel II) bzw. den Vinylmonomeren (Formel IV) erhaltenen Gruppen endständig und/oder seitenständig zur Polysiloxanhauptkette befinden.

In Schema II ist die Umsetzung eines Polysiloxans, welches endständige Vinylgruppen aufweist (Formel I'), mit einem Dithiol (Formel II') zu einem Polysiloxan mit endständigen Thiolgruppen (Formel III') dargestellt. Das Polysiloxan der Formel (III') wird mit Vinylmonomeren (Formel IV') zu einem Blockcopolymeren umgesetzt, welches Struktureinheiten der Formel (V') enthält. In Formel (V') weist die endständige Valenz der endständigen Gruppen -CR²R²-CR²R²- ein Wasserstoffatom auf.

In Schema III ist die Umsetzung eines Polysiloxans, welches endständige Vinylgruppen aufweist (Formel I"), mit einem Tetrathiol (Formel (II") zu einem Polysiloxan mit endständigen Thiolgruppen (Formel III") dargestellt. Das Polysiloxan der Formel (III") wird mit Vinylmonomeren (Formel IV') zu einem Blockcopolymeren umgesetzt, welches Struktureinheiten der Formel (V") enthält. In Formel (V") weist die endständige Valenz der endständigen Gruppen Z ein Wasserstoffatom auf.

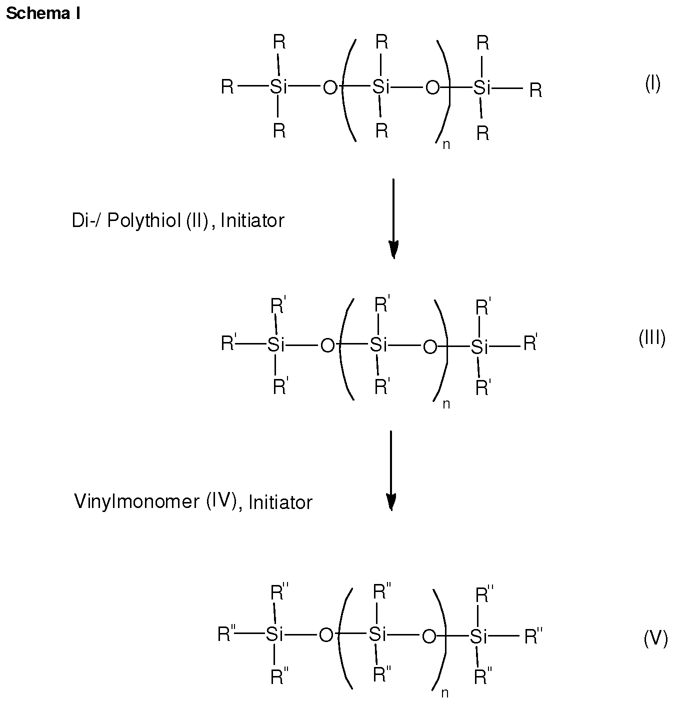

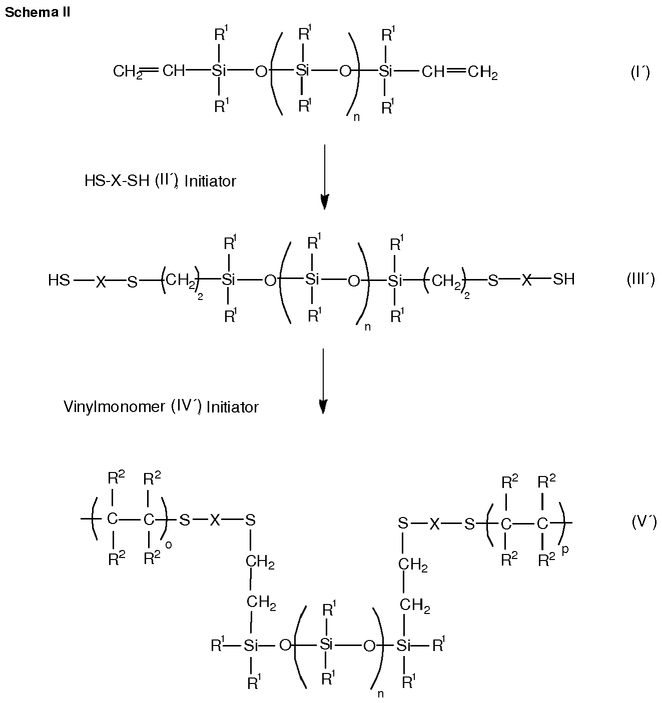

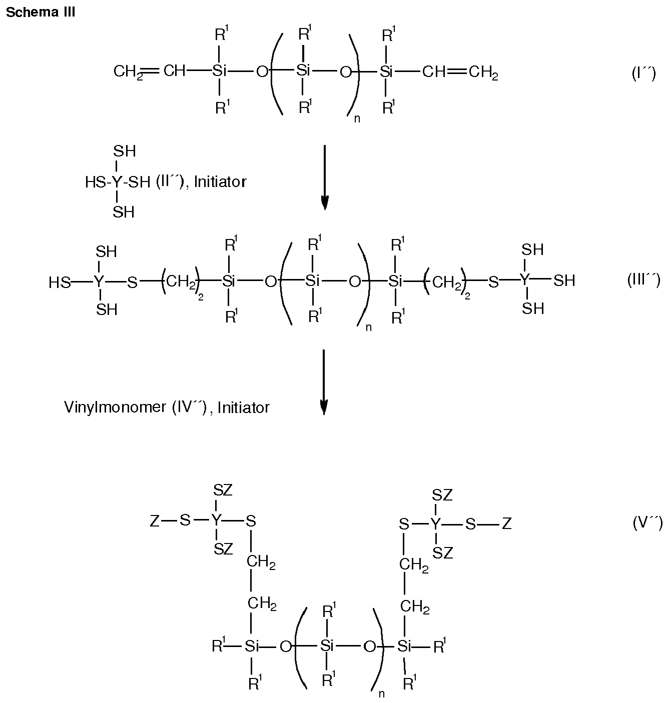

In **Schema I** haben die verwendeten Symbole folgende Bedeutung:
R in Formel (I) bedeuten jeweils gleiche oder voneinander verschiedene Reste aus der Gruppe C₂-C₆-Alkenyl, Phenyl, C₁-C₁₈-Alkyl oder Halogen-C₁-C₁₈-Alkyl, wobei mindestens einer der Reste R eine C₂-C₆-Alkenylgruppe darstellt. Es können einer oder mehrere Reste R C₂-C₆-Alkenylgruppen darstellen, dabei können sich die C₂-C₆-Alkenylgruppen endständig und/oder seitenständig an der Siloxanhauptkette befinden. Die weiteren Reste R sind bevorzugt Methyl und/oder Phenyl, besonders bevorzugt Methyl.
R^{I} in Formel (III) bedeuten jeweils gleiche oder voneinander verschiedene Reste aus der Gruppe R^{A}, Phenyl, C₁-C₁₈-Alkyl oder Halogen-C₁₂-C₁₈-Alkyl, wobei mindestens einer der Reste R^{I} ein Rest R^{A} ist und der Rest R^{A} das Reaktionprodukt der mindestens einen C₂-C₆-Alkenylgruppe in Formel (I) mit einer Di- oder Polythiolverbindung darstellt. Es können einer oder mehrere Reste R^{I} Reste R^{A} darstellen, dabei können sich die Reste R^{A} endständig und/oder seitenständig an der Siloxanhauptkette befinden. Die weiteren Reste R^{I} sind bevorzugt Methyl und/oder Phenyl, besonders bevorzugt Methyl.
R^{II} in Formel (V) bedeuten jeweils gleiche oder voneinander verschiedene Reste aus der Gruppe R^{B}, Phenyl, C₁-C₁₈-Alkyl oder Halogen-C₁-C₁₈-Alkyl, wobei mindestens einer der Reste R^{II} ein polymerer Rest R^{B} ist und der Rest R^{B} das Reaktionsprodukt des mindestens einen Restes R^{A} in Formel (III) mit Vinylmonomeren darstellt. Es können einer oder mehrere Reste R^{II} Reste R^{B} darstellen, dabei können sich die Reste R^{B} endständig und/oder seitenständig an der Siloxanhauptkette befinden. Die weiteren Reste R^{II} sind bevorzugt Methyl und/oder Phenyl, besonders bevorzugt Methyl.
n in den Formeln (I), (III) und (V) bedeutet eine ganze Zahl von 10 bis 5.000, vorzugsweise 20 bis 4.000. Dabei können die n Wiederholeinheiten gleich oder voneinander verschieden sein, beispielsweise können sich Dimethyl-Si-O-Einheiten statistisch mit Phenyl-Methyl-Si-O-Einheiten abwechseln.

Als Di-/Polythiole (II) eigenen sich beispielsweise C₂-C₁₀Alkyl-α,ω-Dithiole wie Ethan-1,2-dithiol oder Ester von Di- und Polyalkoholen mit Mercaptoalkansäuren wie Pentaerythrittetrathioglykolat und Pentaerythrittetra-(3-mercaptopropionat).

In **Schema II** haben die verwendeten Symbole folgende Bedeutung:
R¹ in den Formeln (I'), (III') und (V') bedeuten jeweils gleiche oder voneinander verschiedene Reste aus der Gruppe Phenyl, C₁-C₁₈-Alkyl oder Halogen-C₁-C₁₈-Alkyl. Die Reste R¹ sind bevorzugt Methyl und/oder Phenyl, besonders bevorzugt Methyl.
X in den Formeln (II'), (III') und (V') bedeutet eine C₂-C₁₀-Alkylengruppe.
R² in Formel (V') bedeuten gleiche oder voneinander verschiedene Reste aus der Gruppe H, C₁-C₁₀-Alkyl, C₆-C₁₀-Aryl, C₆-C₁₀-Aryl-C₁-C₁₀-alkyl, C₁-C₁₀-Alkyl-C₆-C₁₀-aryl, C₂-C₁₀-Alkenyl, Organosilyl wie Si(OCH₃)₃ oder C(O)O(CH₂)₃Si(OCH₃)₃, OR³, Halogen, C(O)OC(O)R³, C(O)OR³, CN, NR³C(O)R³, NR³₂, C(O)NR³₂ , worin die Reste R³ gleich oder verschieden Wasserstoff, C₁-C₁₀-Alkyl, C₆-C₁₀-Aryl, C₆-C₁₀-Aryl-C₁-C₁₀-Alkyl oder C₁-C₁₀-Alkyl-C₆-C₁₀-Aryl bedeuten. Dabei können die Alkyl oder Arylreste R² und R³ jeweils unsubstituiert oder durch einen oder mehrere Substituenten aus der Gruppe Halogen substituiert sein.
n in den Formeln (I'), (III') und (V') bedeutet eine ganze Zahl von 10 bis 5.000, vorzugsweise 20 bis 4.000. Dabei können die n Wiederholeinheiten gleich oder voneinander verschieden sein, beispielsweise können sich Dimethyl-Si-O-Einheiten statistisch mit Phenyl-Methyl-Si-O-Einheiten abwechseln.
o und p in Formel (V') bedeuten jeweils eine ganze Zahl von 3 bis 100.000, vorzugsweise von 5 bis 10.000.

In **Schema III** haben die verwendeten Symbole folgende Bedeutung:
R¹ in den Formeln (I"), (III") und (V") bedeuten jeweils gleiche oder voneinander verschiedene Reste aus der Gruppe Phenyl, C₁ bis C₁₈-Alkyl- oder Halogen-C₁- C₁₈-Alkyl. Die Reste R¹ sind bevorzugt Methyl und/oder Phenyl, besonders bevorzugt Methyl.
Y(SH)₄ in den Formeln (II"), (III") und (V") bedeutet das Umsetzungsprodukt eines Tetraols mit einer Mercaptoalkansäure, die vorzugsweise 2 bis 10 C-Atome aufweist, bevorzugt ist Y(SH)₄ ein Pentaerythrittetrathio(C₂-C₁₀)carbonsäureester, wie Pentaerythrittetrathioglykolat oder Pentaerythrittetra-(3-mercaptoprepionat).
Z in Formel (V') bedeuten gleiche oder voneinander verschiedene Reste aus der Gruppe H und (-CR⁴R⁴-CR⁴R⁴-)_{q}, worin R⁴ gleich oder verschieden sind und ausgewählt sind aus der Gruppe C₁-C₁₀-Alkyl, C₆-C₁₀-Aryl, C₆-C₁₀-Aryl-C₁-C₁₀-alkyl, C₁-C₁₀-Alkyl-C₆-C₁₀-aryl, C₂-C₁₀-Alkenyl, Organosilyl wie Si(OCH₃)₃ oder C(O)O(CH₂)₃Si(OCH₃)₃, OR⁵, Halogen, C(O)OC(O)R⁵, C(O)OR⁵, CN, NR⁵C(O)R⁵, NR⁵₂, C(O)NR⁵₂, worin die Reste R⁵ gleich oder verschieden Wasserstoff, C₁-C₁₀-Alkyl, C₆-C₁₀-Aryl, C₆-C₁₀-Aryl-C₁-C₁₀-Alkyl oder C₁-C₁₀-Alkyl-C₆-C₁₀-Aryl bedeuten, und q bedeutet jeweils eine ganze Zahl von 3 bis 100.000, vorzugsweise von 5 bis 10.000, wobei in jeder der Gruppen Y(S-Z)₃ zumindest einer der Reste Z einen Rest (-CR⁴R⁴-CR⁴R⁴-)_{q} darstellt. Dabei können die Alkyl oder Arylreste R⁴ und R⁵ jeweils unsubstituiert oder durch einen oder mehrere Substituenten aus der Gruppe Halogen substituiert sein.
n in den Formeln (I"), (III") und (V") bedeutet eine ganze Zahl von 10 bis 5.000, vorzugsweise 20 bis 4.000. Dabei können die n Wiederholeinheiten gleich oder voneinander verschieden sein, beispielsweise können sich Dimethyl-Si-O-Einheiten statistisch mit Phenyl-Methyl-Si-O-Einheiten abwechseln.

Das Di- oder Polythiol wird im Allgemeinen in einem molaren Verhältnis von ca. 1:1 bezogen auf die Alkenylgruppen zu dem C₂-C₆-alkenylgruppenhaltigen, insbesondere vinylterminierten, Polysiloxan eingesetzt.

Setzt man das Di- oder Polythiol in einem äquimolaren Verhältnis (insb. 0,9 bis 1,1) zu dem C₂-C₆-alkenylgruppenhaltigen, insbesondere vinylterminierten, Polysiloxan ein, können Polysiloxane mit Thiolgruppen, z.B. der Formel (III') und (III") erhalten werden. Durch weitere Umsetzung mit Vinylmonomeren können Blockcopolymere der Formel (V') oder (V") erhalten werden.

Setzt man die Di- oder Polythiole im Unterschuss zum Alkenylpolysiloxan ein (insb. im Verhältnis < 0,9), kann man das Molekulargewicht erhöhen, durch Reaktion mehrerer Thiolgruppen in einem Polythiol mit Alkenylgruppen verschiedener Alkenylpolysiloxane. Setzt man z. B. Polythiole in einem Unterschuss gegenüber dem C₂-C₆-alkenylgruppenhaltigen, insbesondere vinylterminierten, Polysiloxan ein, können verzweigte thiolgruppenhaltige Polysiloxane der Formel (III"a) erhalten werden, die mit Vinylmonomeren zu verzweigten Blockcopolymeren z.B. der Formel (V"a) umgesetzt werden können (Schema IV):

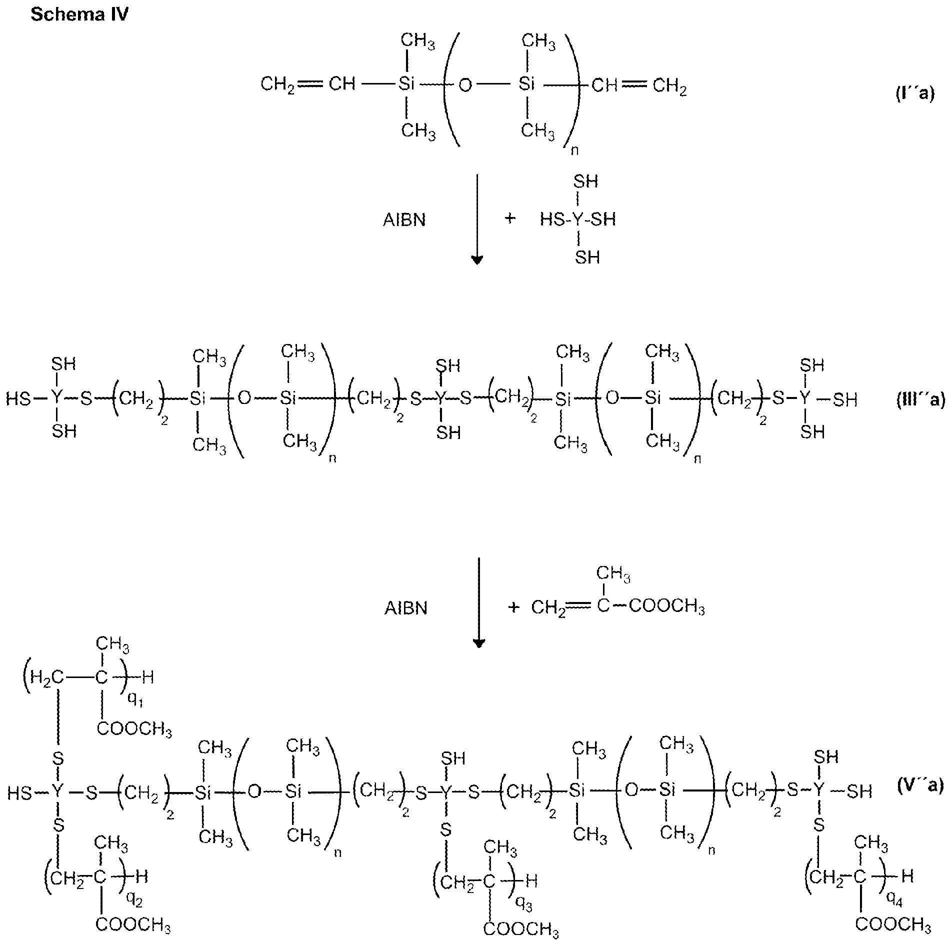

In **Schema IV** haben die verwendeten Symbole folgende Bedeutung:
Y(SH)₄ bedeutet das Umsetzungsprodukt eines Tetraols mit einer Mercaptoalkansäure, die vorzugsweise 2 bis 10 C-Atome aufweist, bevorzugt ist Y(SH)₄ ein Petaerythrittetrathiocarbonsäureester wie Pentaerythrittetrathioglykolat oder Pentaerythrittetra-(3-mercaptopropionat).
n in den Formeln (I"a), (III"a) und (V"a) bedeutet eine ganze Zahl von 10 bis 5.000, vorzugsweise 10 bis 2.000, besonders bevorzugt 20 bis 1.000.
q₁, q₂, q₃ und q₄ in Formel (V"a) bedeuten jeweils eine ganze Zahl von 3 bis 100.000, vorzugsweise von 3 bis 10.000, besonders bevorzugt 5 bis 1.000.

Setzt man die Di- oder Polythiole im Verhältnis > 1 zum Alkenylpolysiloxan ein, erhält man besonders niedrig viskose Polymere, da es dann in der Regel nicht zu einer Kettenverlängerung kommt.

Die Durchführung der Synthesen kann nach gängigen bei der radikalischen Polymerisation von Alkenylverbindungen verwendeten Verfahren erfolgen, z.B. in Substanz, in Lösung, in Emulsion oder in Suspension, auch können kontinuierliche und diskontinuierliche Verfahren zum Einsatz kommen.

Sowohl die Anlagerung des Di- oder Polythiols an das Alkenylgruppen tragende Polysiloxan als auch die nachfolgende Polymerisation mit Vinylmonomeren können in einem Lösungsmittel durchgeführt werden, gegebenenfalls auch im gleichen Lösungsmittel. Dabei sind Lösungsmittel, die das Polysiloxan und das Vinylpolymere lösen, bevorzugt. Geeignete Lösungsmittel sind beispielsweise Alkylaromaten wie Toluol und Xylol, hydrophobe Ester wie Butylacetat oder Ether wie t-Amylmethylether. Verwendet man Monomere, die selbst gute Lösungsmittel für Polysiloxane sind, so kann man die Lösungsmittelmenge reduzieren oder ganz auf das Lösungsmittel verzichten. Ein Beispiel für ein solches Monomeres ist Cyclohexylmethacrylat.

Die Umsetzung des Alkenylgruppen-haltigen Polysiloxans mit dem Di- oder Polythiol (z. B. Pentaerythittetrathioglykolat) wie auch die Umsetzung des SH-Gruppen haltigen Polysiloxans (z.B. der Formel III') mit dem Vinylmonomeren kann bevorzugt nach dem Sauerteigverfahren durchgeführt werden. Bei diesem Verfahren wird ein Teil des Endprodukts zu Beginn der Reaktion als Emulgator eingesetzt.

Die gewählte Reaktionstemperatur, im Allgemeinen 30 - 150 °C, bevorzugt 50 - 120 °C, hängt im Wesentlichen von der Halbwertszeit des Initiatorzerfalls und dem Siedepunkt der Rezepturbestandteile (Monomere, Lösungsmittel) ab. In der Regel wird in Rührreaktoren bei einem Druck < 10 bar, bevorzugt bei Normaldruck, gearbeitet.

Bei der Umsetzung der Polysiloxane (z.B. der Formel I, I', I" oder I"a) zu den thiolgruppenhaltigen Polysiloxanen (z.B. der Formel (III, III', III" oder III"a) wie auch bei deren weiterer Umsetzung zu Blockcopolymeren (z.B. Blockcopolymere der Formel V oder V"a oder Blockcopolymere mit Struktureinheiten der Formel V'oder V") handelt es sich um radikalische Reaktionen, die entsprechend durch Radikale bildende Initiatoren ausgelöst werden können. Geeignete Initiatoren sind z.B. AIBN und 1,1-Azobis(cyclohexancarbonitril) oder Peroxide wie t-Butyl-peroxy-2-ethylhexanoat oder Dilaurylperoxid. Im Allgemeinen beträgt der Anteil des Initiators bezogen auf den Gesamtansatz weniger als 2 Gew.-%, bevorzugt weniger als 0,5 Gew.-%, und bezogen auf das eingesetzte Di- oder Polythiol weniger als 10 Gew.-%, bevorzugt weniger als 5 Gew.-%.

Die erhaltenen Lösungen der Polysiloxan-Vinylpolymer-Blockcopolymere können z.B. direkt als Lacklösungen für Beschichtungen eingesetzt werden. Es ist auch möglich, die Blockcopolymerlösungen erst zu entgasen (z.B. mittels eines Extruders) und die Polymere darauf in einem anderen, z.B. aromatenfreien Lösungsmittel, wieder aufzulösen und so zu einem besonders umweltfreundlichen Lack zu kommen.

Im Allgemeinen liegt das Gewichtsverhältnis von Polyvinyleinheiten zu Polysiloxaneinheiten im Bereich 1:20 bis 10:1, bevorzugt im Bereich von 1:10 bis 2:1. Zudem ist die Länge der Polysiloxanketten n und die Anzahl und Länge der Polyvinylketten (ausgedrückt in Schema II durch den Index o und p und in Schema III und IV durch die Indices q) von Bedeutung. In der Regel sind die Indices o, p, q kleiner als der Index n. Dabei ist bevorzugt, dass jede Polysiloxankette mit wenigstens zwei Vinylpolymerketten verknüpft ist.

Insbesondere für die Anwendung als TPE (thermoplastische Elastomere) oder bei Anwendung als Lackrohstoff für physikalisch vernetztbare Beschichtungen ist es von Bedeutung, dass die Polysiloxanketten in α-Position und in ω-Position zumindest eine Polyvinylkette aufweisen. So kann z.B. Pentaerythrit erst mit dem Vinylpolysiloxan und später mehrfach mit den Vinylmonomeren reagieren. Dabei kann es durch Kettenverlängerung auch zu verzweigten Produkten kommen. Dies ist in Schema IV am Beispiel der Umsetzung von Divinylpolysiloxan mit Pentaerythrittetrathioglykolat und MMA dargestellt.

Verwendet man Methylmethacrylat (MMA) als Vinylmonomeres, so erhält man bei einem geringen Anteil an MMA, z.B. kleiner als 30 Gew.-% sehr dehnbare, thermoplastisch verarbeitbare Elastomere mit einer Festigkeit, die Silikonkautschuk deutlich überlegen ist. Man erhält Elastomere mit sehr hoher Dehnung, wenn man von sehr hochmolekularen Polysiloxanen ausgeht. Die Festigkeit solcher Elastomeren lässt sich über eine Erhöhung des MMA-Gehalts verbessern. PMMA-Polysiloxan-PMMA-(Block)Copolymere können auch zur Schlagzähmodifizierung von PMMA eingesetzt werden. Für diese Anwendung ist im Allgemeinen n > 100 und q bzw. q₁ - q₄ > 20.

In der Regel sind die PMMA-Polysiloxan-PMMA-(Block)Copolymeren weiß aufgrund der Lichtstreuung durch den hohen Unterschied im Brechungsindex zur Luft. Bei Einsatz von Siloxancopolymeren (II) mit einem Verhältnis Dimethylsiloxan : Phenylmethylsiloxan von ca. 1:1 lassen sich auch transparente PMMA-Polysiloxan-PMMA-Systeme (V) herstellen.

Besonders interessant erscheint neben den PMMA-Polysiloxan-PMMA-(Block)Copolymeren das System Polystyrol-Polysiloxan-Polystyrol.

Allgemein sind Polysiloxan-Vinylpolymer-(Block)Copolymere von Vinylpolymeren mit einer Glasübergangstemperatur > 70 °C bevorzugt, so z.B. von Styrolacrylnitril-Copolymer (SAN), Copolymeren aus MMA und Cyclohexylmethacrylat und Copolymeren aus MMA und Styrol.

Entsprechend ihrer Herstellung durch radikalische Polymerisation handelt es sich bei den Vinylpolymeren der (Block)Copolymeren um Polymere mit einer Molekulargewichtsverteilung, in der Regel ist Mw/Mn im Bereich von 1,8 bis 2,2. Für das Polysiloxan gilt in der Regel ein Mw/Mn zwischen 1,1 und 5.

Die erfindungsgemäßen Copolymere stellen vorzugsweise Blockpolymere dar. Die Copolymere eignen sich für verschiedene Anwendungen, z.B. als Basispolymer für Kleb- und Dichtstoffe, als thermoplastische Elastomere, z.B. zur Anwendung als Griffteile, als Lackrohstoffe, insbesondere zur Hydrophobierung und als Schlagzähmodifier. Anwendungen für die Produkte sind vor allem gegeben, wo hohe Tieftemperaturzähigkeit und gute Witterungsbeständigkeit verlangt wird.

Die vorliegende Erfindung wird durch die nachfolgenden Ausführungsbeispiele illustriert:
Identität der Ausgangsstoffe:
   Polymer VS 200 (hanse chemie AG, vinylterminiertes Polydimethylsiloxan mit einer mittleren Viskosität von 200 mPas, Molgewicht ca. 8.000 g/mol)
   Polymer VS 500 (hanse chemie AG, vinylterminiertes Polydimethylsiloxan mit einer mittleren Viskosität von 500 mPas, Molgewicht ca. 18.000 g/mol)
   Polymer VS 20.000 (hanse chemie AG, vinylterminiertes Polydimethylsiloxan mit einer mittleren Viskosität von 20.000 mPas, Molgewicht ca. 70.000 g/mol)
   MMA: Methylmethacrylat
   lonol: 2,6-Di-tert-butyl-4-methylphenol
   AIBN: Azo-bis-(isobutyronitril)

### Beispiel 1:

Eine Mischung aus 50 g Polymer VS 200, 5,6 g Pentaerythrit-tetrathioglykolat, 93,4 g Toluol und 0,188 g AIBN wird unter Argon als Schutzgas unter Rühren zügig auf 85 °C erwärmt. Nach ca. 7 min bei 85 °C wird die anfangs trübe Mischung klar. Nach weiteren 3 Minuten bei 85 °C werden 43 g MMA zugesetzt. Darauf wird 2 h bei 85 °C gerührt. Dabei kommt es nach ca. 30 min zu einer Eintrübung.

Man erhält eine trübe Dispersion, die zu einem grauweißen Film getrocknet wird. PMMA-Gehalt des Films: 38 Gew.-%.

### Beispiel 2:

In einem Rührreaktor wird unter Argon als Schutzgas eine Lösung von 2,0 g Pentaerythrit-tetrathioglykolat in 70 g Toluol vorgelegt und auf 85 °C erwärmt. Darauf wird eine Lösung aus 0,08 g AIBN und 38,5 g Polymer VS 500 in 20 g Toluol zugesetzt. Die dabei erhaltene klare Mischung wird 30 min bei 85 °C gerührt. Danach wird eine Lösung von 0,11 g AIBN in 43 g MMA zugesetzt und 2 h bei 85 °C gerührt. Im Verlauf dieser Reaktion kommt es zur Eintrübung des Reaktionsgemisches. Schließlich gibt man 0,038 g lonol, gelöst in 0,6 g Toluol als Lösungsmittel, zu und kühlt ab.

Es resultiert ein viskoses, trübes Öl, Feststoffgehalt: 39 Gew.-%, PMMA- Gehalt der Polymeren: 36 Gew.-%. Die Dispersion trocknet zu einem zähen, dehnbaren Film. Der Film ist klebfrei und zeigt eine geringe Streckspannung.

### Beispiel 3: Synthese eines Polydimethylsiloxans mit SH-Endaruppen

Eine Vorlage, enthaltend 4,14 g Pentaerythrit-tetrathioglykolat und 151 g Toluol wird unter Argon auf 85 °C erwärmt. Hierzu gibt man eine Lösung von 0,090 g AIBN und 80 g Polymer VS 500 in 50 g Toluol. Die erhaltene klare Lösung wird 30 min bei 85°C gerührt. die Lösung bleibt klar. Die Lösung wird auf 65°C gekühlt. Man setzt 0,016 g lonol zu, gelöst in 0,6 g Toluol und zieht das Lösungsmittel im Vakuum ab (Badtemperatur: 65 °C, Druck von 180 mbar auf 10 mbar abnehmend).

Man erhält ein hochviskoses, weißes Öl (85 g). Zur besseren Handhabbarkeit wird das Öl in Methacrylatmonomeren gelöst.

### Beispiel 4: Synthese einer Gummiplatte auf der Basis des PDMS mit SH-End-gruppen gemäß Beispiel 3

84 g des hochviskosen, weißen Öles gemäß Beispiel 3 werden in einer Mischung aus 23 g MMA und 47 g Cyclohexylmethacrylat gelöst. Diese niedrigviskose, schwach trübe Lösung/Dispersion wird mit einer Lösung von 0, 16 g AIBN in 2,5 g Cyclohexylmethacrylat versetzt und in Polymerisationskammern gefüllt.

### Aufbau der Polymerisationskammern:

Glasplatte / PET- Folie / Reaktionsmischung / PET- Folie / Glasplatte, Distanzschnur: 3mm. Die Reaktionsmischung wird im Wasserbad 2 h bei 70 °C und danach 2 h bei 85 °C polymerisiert. Nach dem Abkühlen und Abtrennen der PET- Folien resultieren ca. 3 mm dicke, weiße Gummiplatten.

### Beispiel 5: Synthese eines Polydimethylsiloxans mit SH-Endgruppen

Man wiederholt den Versuch gemäß Beispiel 3, wählt jedoch einen höheren Gehalt an Pentaerythrit-tetrathioglykolat: 4,84 g (Ziel: kürzere Ketten). Reaktionszeit bei 85 °C wie in Beispiel 3: 30 min, anschließend Stabilisierung mit 0,023 g lonol in 1,0 g Toluol. Danach wird das Lösungsmittel im Vakuum abgezogen. Nach dem Abkühlen auf Raumtemperatur resultiert eine weiße, bei Raumtemperatur fließende Dispersion.

### Beispiel 6: Synthese eines Polydimethylsiloxans mit SH-Endgruppen (lösungsmittelfrei)

Eine Mischung aus 0,08 g AIBN, 5,1 g Pentaerythrit-tetrathioglykolat, 81,34 g Polymer VS 500 und 2,52 g Polymeres gemäß Beispiel 5 wird unter Argon zügig auf 85 °C erwärmt, 15 min bei 85 °C gerührt, danach auf 60 °C gekühlt und durch Zugabe von 0,020 g lonol stabilisiert.

Nach Abkühlen auf Raumtemperatur erhält man eine weiße, bei Raumtemperatur fließende Dispersion.

### Beispiel 7

In einem Rührreaktor wird unter Argon als Schutzgas eine Lösung von 0,768 g Pentaerythrittetra-(3-mercaptopropionat) in 51 g Toluol vorgelegt und auf 85 °C erwärmt. Darauf wird eine Lösung von 0,114 g AIBN und 43,3 g Polymer VS 20.000 in 50 g Toluol zugesetzt. Die dabei erhaltene klare Lösung wird 20 min bei 85 °C gerührt. Danach wird eine Lösung von 0,11 g AIBN in 41,2 g MMA zugesetzt und 2 h bei 85 °C gerührt. Es wird auf 75 °C gekühlt und darauf eine Lösung von 0,037 g lonol in 1 g Toluol zugegeben.

Nach dem Abkühlen auf Raumtemperatur resultiert eine viskose, weiße Dispersion mit einem Feststoffgehalt von 36 %. Der Feststoff enthält 34 % PMMA. Beim Eintrocknen der Dispersion in einer Glasschale erhält man einen weichen Film, der nur unter Zerstörung vom Glas abgelöst werden kann.

### Beispiel 8

In einem 250ml Reaktor werden unter Stickstoff 2 g Pentaerythrit-tetrathioglykolat in 70 g Toluol gelöst. Es wird auf 85°C erwärmt, danach werden 0,14 g AIBN und 68 g eines vinylterminierten Polydimethylsiloxans mit einem Molekulargewicht von 40.000, gelöst in 70 g Toluol, zugesetzt.

Man lässt etwa 20 min bei 85°C rühren und gibt darauf 35 g MMA zu. Man hält 2 h bei 85°C, darauf wird gekühlt. Man erhält eine viskose Dispersion, die direkt zu einem hochelastischen, weißen Gummi ausgegossen wird. Der so erhaltene Elastomerfilm hat eine Reißdehnung > 300% , wenn er mit ca. 5 mm/s gezogen wird.

### Beispiel 9: Mechanische Eigenschaften der Filme

An den Proben aus den Beispielen 1 und 2 wurden die mechanischen Eigenschaften bestimmt. Die Zugeigenschaften (Bruchdehnung, Zugfestigkeit (Fmax), E-Modul) wurden anhand von Prüfkörpern analog DIN 53504 / ISO 37 (Form Die S2) auf einer Zugprüfmaschine der Fa. Zwick bestimmt. Die Shore-Härte (Shore A) wurde nach DIN 53505 bestimmt.

| | | Beispiel 1 | Beispiel 2 |
|---|---|---|---|
| Shore A | - | 37 | 41 |
| Fmax | [N/mm²] | 1,2 | 4,0 |
| Bruchdehnung | [%] | 91 | 172 |
| E-Modul 95 - 105 % | [N/mm²] | - | 3,43 |
| E-Modul 45 - 55 % | [N/mm²] | 1,28 | - |

## Patentansprüche

1. Verfahren zur Herstellung von Polysiloxanen mit Thiolgruppen, durch Umsetzung von C₂-C₆-alkenylgruppenhaltigen Polysiloxanen mit Dithiolen oder Polythiolen.

2. Verfahren nach Anspruch 1, wobei ein lineares Polysiloxan eingesetzt wird.

3. Verfahren nach Anspruch 1 oder 2, wobei ein Polysiloxan mit endständigen und/oder seitenständigen C₂-C₆-Alkenylgruppen eingesetzt wird.

4. Verfahren nach einem oder mehreren der Ansprüche 1 bis 3, wobei die Di- und Polythiole Ester von Di- und Polyalkoholen mit Mercaptoalkansäuren darstellen, vorzugsweise Ester von Polyalkoholen mit Mercaptoessigsäure.

5. Verfahren nach einem oder mehreren der Ansprüche 1 bis 4, wobei ein Polythiol mit drei, vier oder fünf Thiolgruppen eingesetzt wird.

6. Verfahren nach einem oder mehreren der Ansprüche 1 bis 5, wobei die Umsetzung radikalisch erfolgt.

7. Polysiloxan mit Thiolgruppen, enthaltend Struktureinheiten abgeleitet von Di- oder Polythiolen.

8. Polysiloxan, erhältlich nach dem Verfahren gemäß einem oder mehreren der Ansprüche 1 bis 6.

9. Verfahren zur Herstellung von Copolymeren von Polysiloxanen, enthaltend die Schritte
a) Umsetzung von C₂-C₆-alkenylgruppenhaltigen Polysiloxanen mit Dithiolen oder Polythiolen zu Polysiloxanen mit Thiolgruppen gemäß dem Verfahren nach einem oder mehreren der Ansprüche 1 bis 6, und
b) Umsetzung der in Schritt a) erhaltenen Polysiloxanen mit Thiolgruppen mit Vinylmonomeren.

10. Verfahren gemäß Anspruch 9, worin als Vinylmonomer ein Acrylat und/oder Methacrylat eingesetzt wird.

11. Copolymer mit Einheiten A) von Polysiloxanen mit Thiolgruppen, enthaltend Struktureinheiten abgeleitet von Di- oder Polythiolen und Einheiten B) von Vinylmonomeren.

12. Copolymer, erhältlich nach dem Verfahren gemäß Anspruch 9 oder 10.
